# EUROPEAN PATENT APPLICATION

(11) **EP 4 481 767 A1**
(43) Date of publication of application: **25.12.2024**
(21) Application number: 23306004.5
(22) Date of filing: 23.06.2023
(51) Int. Cl.: G21K 1/00, G06N 10/40

(54) **QUANTUM COMPUTING DEVICE**

(71) Applicant: Pasqal, 91300 Massy (FR)
(72) Inventor: BLOCH, Etienne, 91300 MASSY (FR); BOURACHOT, Lilian, 91300 MASSY (FR); DREON, Davide, 91300 MASSY (FR); PARIS, Julien, 91300 MASSY (FR); PICHARD, Grégoire, 91300 MASSY (FR)
(74) Representative: Lavoix

(57) **Abstract**

The present invention concerns a quantum computing device (10) comprising:
- a laser beam generation unit (12) for generating a laser beam which when focused generates an array of trapping sites for particles,
- an imaging unit (14) for imaging particles trapped in the generated trapping sites,
- a vacuum chamber (16) comprising the trapped particles, the vacuum chamber (16) comprising:
• a cryogenic bloc (20) in which a target region (28) for trapping particles is defined,
• a first optical unit (22) able to focus the laser beam generated by the laser beam generation unit (12) on the target region (28) to form an array of trapping sites, and
• an alignment carrier (26) holding the first optical unit (22),

wherein the first optical unit (22) is an objective held by the alignment carrier (26) positioned outside the cryogenic bloc (20).

## Description

### TECHNICAL FIELD OF THE INVENTION

The present invention concerns a quantum computing device.

Aspects of the disclosure are particularly applicable to vacuum chambers for quantum computing devices, especially for neutral atom-based quantum computing devices.

### BACKGROUND OF THE INVENTION

The document WO 2021/165155 A1 discloses a quantum computing device comprising a vacuum chamber. An atom trapping unit is configured to generate a three-dimensional array of optical tweezers in the vacuum chamber. The optical tweezers are capable of trapping atoms in a target region inside the vacuum chamber, said atoms originating from an atom source. A cryostat is configured to establish a cryogenic temperature in the vacuum chamber.

In the known design of the document WO 2021/165155 A1, two aspherical lenses are placed in the vacuum chamber, on opposite sides of the target region (lenses LA1, LA2, see figs. 6 and 9 of the document). The first lens LA1 is able to focus laser light coming from outside the vacuum chamber (from a first laser source SL1 and a spatial light modulator SLM) to generate a network of optical tweezers inside the vacuum chamber. The second lens LA2 is able to collimate the outgoing beam exiting the chamber towards an imaging camera (CAMP on Fig. 9).

In the existing design, the lenses LA1 and LA2 are placed inside the vacuum chamber, inside a cold region of the cryostat (e.g. a 4K region delimited by 4K thermal shields). The lenses are held together in place by a mechanical lens holder assembly placed in the vacuum chamber. The lens holder mitigates the mechanical stress caused by the exposure to low temperature and to temperature variations during operation cycles (e.g. degassing at 500K and low temperature operation at 4K).

However, the aspherical lenses show limitation in term of tweezer quality, especially when trying to increase the number of tweezers in the array, which is of particular importance.

### SUMMARY OF THE INVENTION

Hence, there exists a need for a means enabling to improve the quality of trapping sites in a cryogenic environment.

To this end, the invention relates to a quantum computing device comprising:
- a laser beam generation unit for generating a laser beam which when focused generates an array of trapping sites for particles,
- an imaging unit for imaging particles trapped in the generated trapping sites,
- a vacuum chamber comprising the trapped particles, the vacuum chamber comprising:
   - a cryogenic bloc in which a target region for trapping particles is defined,
   - a first optical unit able to focus the laser beam generated by the laser beam generation unit on the target region to form an array of trapping sites, and
   - an alignment carrier holding the first optical unit
   wherein the first optical unit is an objective, the alignment carrier being positioned outside the cryogenic bloc and holding the first optical unit so that at least a part of the first optical unit is inserted into the cryogenic bloc.

Hence, the invention renders possible the use of an objective in a cryogenic environment, but without cooling it, which enables improving the optical quality of the laser beam and thus of the generated trapping sites. The field of view is also increased. Indeed, the materials of objectives contract when cooling, and at a different rate. So this can produce stress between metallic, glass and glue parts. In particular, this could result in misalignment of the optics, birefringence in the optics and cracks/destruction of the glue and the optics. These effects are so hard to control that no manufacturer would accept to do that. The invention allows to overcome this constraint.

In addition, using an alignment carrier 26 for holding the first optical unit 22, and, optionally the second optical unit 24, enables to obtain a more compact cryostat with an easy access to these optical units for maintenance. Moreover, before operation, when the objectives are installed, fine-tuning and laser alignment are easier.

The quantum computing device according to the invention may comprise one or more of the following features considered alone or in any combination that is technically possible:
- the device comprises also an additional imaging unit for imaging the trapping sites, the cryogenic bloc comprising a second optical unit able to collimate, towards the additional imaging unit, the light coming from the trapping sites, the second optical unit facing the first optical unit;
- the second optical unit is an objective held by the alignment carrier, the alignment carrier holding the second optical unit so that at least a part of the second optical unit is inserted into the cryogenic bloc;
- the first optical unit and the second optical unit are identical;
- the cryogenic bloc comprises a first cryogenic enclosure delimiting a first cold region and a second cryogenic enclosure delimiting a second cold region, the second cryogenic enclosure being inside the first cryogenic enclosure, the second cold region being colder than the first cold region, each enclosure having holes allowing a beam of light to go through said enclosure;
- the alignment carrier is fixed to an external mount allowing the alignment carrier to remain outside the cryogenic bloc and at least a part of the first optical unit to be inserted into the cryogenic bloc;
- the alignment carrier is made in stainless steel;
- the cryogenic bloc is made in metal or metal alloy, such as copper, for example in gold-coated copper;
- the cryogenic bloc has a cylindrical form with an upper cylinder and a lower cylinder centered on the same axis, the upper cylinder containing the target region , the diameter of the upper cylinder being smaller than the diameter of the lower cylinder;
- the laser beam generation unit comprises a laser source able to generate a laser beam and a beam shaper able to shape the laser beam so as to obtain an array of trapping sites for particles when the laser beam is focused;
- the particles are polarizable particles sensitive to alternative current Stark shift from lasers, the particles being preferably neutral atoms, such as Rubidium atoms or Strontium atoms.

### BRIEF DESCRIPTION OF THE DRAWINGS

The invention will be easier to understand in view of the following description, provided solely as an example and with reference to the appended drawings in which:
- Figure 1 is a schematic view of an example of a quantum computing device,
- Figure 2 is a schematic view of an example of a cryogenic bloc comprising a first optical unit and an alignment carrier supporting the first optical unit, and
- Figure 3 is a schematic view of an example of the alignment carrier of figure 2.

### DETAILED DESCRIPTION OF SOME EMBODIMENTS

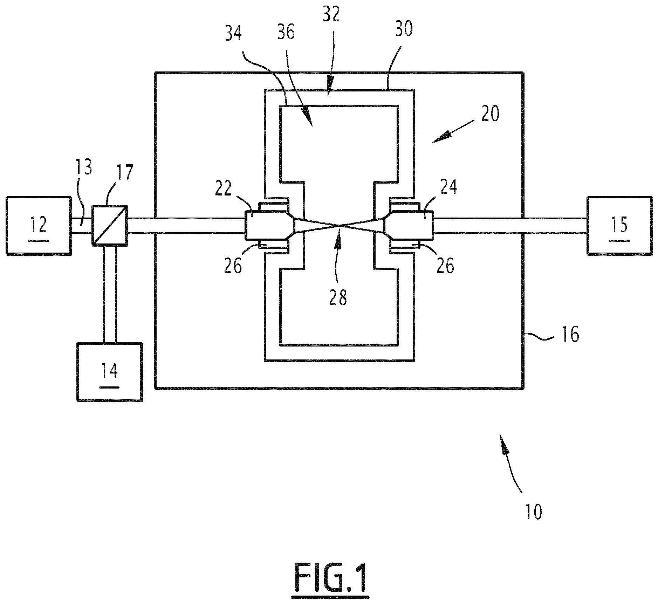

A quantum computing device 10 is schematically illustrated on figure 1.

A quantum computing device, or quantum processor, comprises an array of qubits (also called a qubit register or quantum register), as well as hardware for manipulating these qubits (e.g., for assembling the quantum register and/or reading or modifying the state of some or all of the qubits). A quantum computing device is adapted to perform quantum operations on qubits.

A quantum computing device uses the quantum properties of matter, such as superposition and entanglement, to perform operations on data. Unlike a classical computer based on transistors working on binary data (coded on bits, 0 or 1), the quantum computing device works on qubits whose quantum state can take a continuous rather than discrete number of values.

In particular, a qubit refers to a two-level quantum mechanical system. For example, a qubit comprises two basic quantum states I0> and I1> representing the possible quantum states of the qubit. According to the superposition principle of quantum mechanics, any superposition of the form aI0> + bI1> (a and b being complex numbers and aa*+bb*=1) is a possible quantum state of the qubit.

In the embodiments of the invention, the array of qubits is generated by trapping particles in optical trapping sites. In an example, the particles are polarizable particles sensitive to alternative current Stark shift from lasers. The particles are preferably neutral atoms, such as Rubidium atoms or Strontium atoms.

As illustrated on figure 1, the quantum computing device 10 comprises a laser beam generation unit 12, an imaging unit 14 and a vacuum chamber 16. The quantum computing device 10 also comprises elements for performing operations on qubits, which are not described in detail in what follows.

The laser beam generation unit 12 is able to generate a laser beam 13 which when focused generates an array of trapping sites for particles (e.g., optical tweezers).

In an example of implementation, the laser beam generation unit 12 comprises a laser source, or equivalent, able to generate a laser beam and a beam shaper able to shape the laser beam (e.g., to impart a specific intensity pattern to the laser beam) so as to obtain an array of trapping sites for particles when the laser beam is focused.

The beam shaper is, for example, a spatial light modulator (SLM), such as an optical phase modulator, preferably a liquid crystal optical modulator (LCOS-SLM). In another example, the beam shaper comprises one or more acousto-optical deflector, or a device with metasurfaces.

The imaging unit 14 is configured for imaging electromagnetic flux emitted by particles trapped in the array of trapping sites. For example, in the case of atoms, the imaging unit 14 is suitable to detect the fluorescence emitted from the atoms trapped in the trapping sites.

The imaging unit 14 is, for example, a camera such as a charge-coupled device (CCD) camera, or any suitable imaging technology.

For example, the fluorescence light emitted by the trapped atoms can be collected and back propagates in parallel with the laser beam 13 before being redirected towards the imaging unit 14. In that case, preferably, the imaging unit 14 is placed on the same side of the device 10 as the laser beam generation unit 12. The redirection is for example carried out by an optical system, such as an optical splitter 17.

Optionally, in some embodiments, the device 10 may also comprise an additional imaging unit 15, configured to acquire images of the trapping sites during preparation of the quantum register, for example for verifying the initial state and/or the initial position of the trapping sites. The additional imaging unit 15 may however be omitted.

The additional imaging unit 15 is, for example, a camera such as a charge-coupled device (CCD) camera, or any suitable imaging technology.

The vacuum chamber 16 comprises the trapped particles.

For example for atoms, during use, a vacuum is created in the vacuum chamber 16 and a dilute atomic vapor, created in a different unit, is sent in a magneto-optical trap in the vacuum chamber 16. The quantum register is created by populating at least some of the trapping sites with atoms from the dilute atomic vapor.

An example of such a system is described in the article by Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi:10.22331/q-2020-09-21-327.

Other embodiments are nonetheless possible.

As illustrated on figure 1, the vacuum chamber 16 comprises a cryogenic bloc 20, at least a first optical unit 22 and, possibly, a second optical unit 24, although the second optical unit 24 may be omitted in some embodiments. The first optical unit 22 is held in position by an alignment carrier 26, or holder, which is associated to the cryogenic unit 20. Preferably, as in this specific example visible on figure 1, the first optical unit 22 and the second optical unit 24 are held by the alignment carrier 26.

The cryogenic bloc 20 is a bloc with a low temperature (below 120 Kelvins (K)).

The cryogenic bloc 20 comprises a region defined as being a target region 28 for trapping particles. In other words, the laser beam generated by the laser generation unit 12 aims to be focused on the target region 28 so as to generate the trapping sites for particles.

Preferably, the cryogenic bloc 20 is made in copper, for example in gold-coated copper. Alternatively, the cryogenic bloc 20 can be made in any suitable metal or metallic alloy.

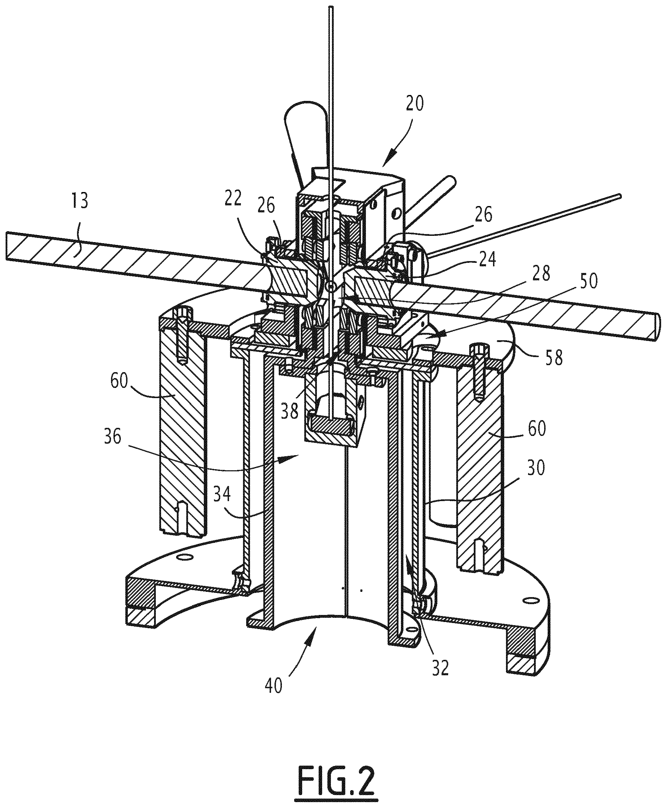

In an example of implementation as illustrated on figures 1 and 2, the cryogenic bloc 20 comprises a first cryogenic enclosure 30 delimiting a first cold region 32 and a second cryogenic enclosure 34 delimiting a second cold region 36.

The second cryogenic enclosure 34 is inside the first cryogenic enclosure 30.

For example, the first cryogenic enclosure 30 and the second cryogenic enclosure 34 have similar or complementary shapes, and the second cryogenic enclosure 34 is nested inside the first cryogenic enclosure 30.

The second cryogenic enclosure 34 is configured so that, during operation of the cryogenic bloc 20, the second cold region 36 reaches a temperature lower than the temperature of the first cold region 32. In other words, the second cold region 36 is colder than the first cold region 32. Hence, the first cryogenic enclosure 30 is an intermediate temperature stage.

Each enclosure 30, 34 has holes which allow a beam of light to go through said enclosure. For example, one or more holes are arranged to allow the laser beam generated by the laser beam generation unit 12 to be focused, by the first optical unit 22, on the target region 28. Optionally, one or more holes are arranged to allow the electromagnetic flux emitted by particles trapped in trapping sites to be collimated, by the second optical unit 24, towards the additional imaging unit 15, as this will be described later in the description. Optionally, one or more additional holes are arranged for cooling and trapping the atom vapor (magneto-optical trap) in the target region 28 before loading the atoms in the quantum register.

Preferably, no optical windows are inserted in the holes, enabling to simplify the manufacturing of the cryogenic bloc 20. In a variant, optical windows are inserted in the holes for a better thermal insulation of the cryogenic bloc 20.

In an example, the first cold region 32 has a temperature comprised between 20 K and 100 K, preferably, between 30 K and 70 K. The second cold region 36 has a temperature comprised between 3 K and 10 K, preferably between 3 K and 5 K.

Preferably, as in the example of figure 2, the cryogenic bloc 20 has a cylindrical form with an upper cylinder 38 and a lower cylinder 40 centered on the same axis. The upper cylinder 38 contains the target region 28. The diameter of the upper cylinder 38 is smaller than the diameter of the lower cylinder 40. The cryogenic bloc 20 is therefore more compact as compared to a configuration where the two cylinders would have quite the same diameter. This is made possible by the specific positioning of the first optical unit 22, and possibly the second optical unit 24, as described in the following.

The first optical unit 22 is able to focus the laser beam generated by the laser beam generation unit 12 on the target region 28 so as to form an array of trapping sites for particles.

The first optical unit 22 is an objective. The objective comprises several optical elements, for example, several lenses. The objective is, for example, a microscope objective. The use of an objective instead of a single aspheric lens enables to increase the field of view, and to reduce optical aberrations.

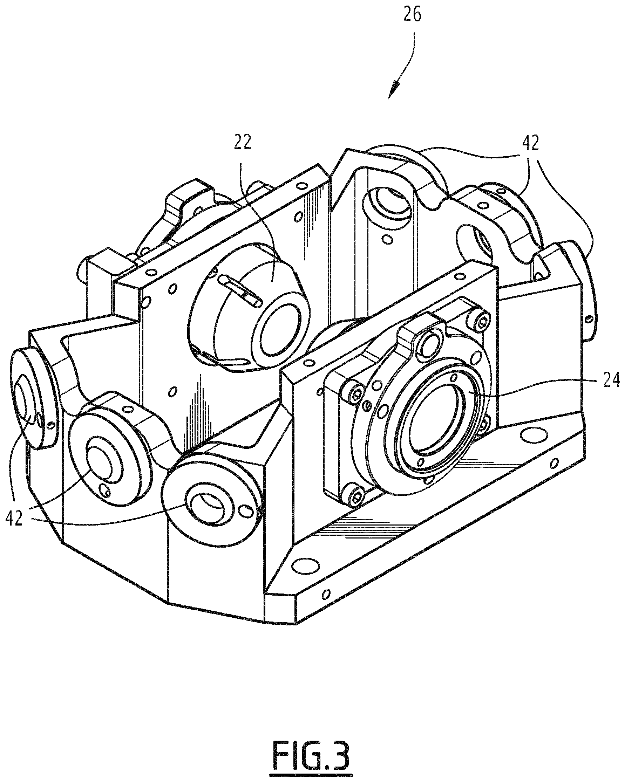

The first optical unit 22 is held by the alignment carrier 26 which is positioned outside the cryogenic bloc 20. The alignment carrier 26 holds the first optical unit 20 so that at least a part of the first optical unit 22 (or all) is inserted into the cryogenic bloc 20 (see figure 3). Hence, the first optical unit 22 is held by the alignment carrier 26 at ambient temperature, and goes inside the cryogenic bloc 20 (colder section), but without touching it. This enables the first optical unit 20 to be in a cold environment but without cooling the first optical unit 20.

The second optical unit 24 (optional) is able to collimate (parallel rays) towards the additional imaging unit 15, the light coming from the trapping sites. The second optical unit 24 faces the first optical unit 22.

Preferably, the second optical unit 24 is an objective held by the alignment carrier 26. The alignment carrier 26 holds the second optical unit 24 so that at least a part of the second optical unit 24 (or all) is inserted into the cryogenic bloc 20 (see figure 3). Hence, like the first optical unit 22, the second optical unit 24 is held by the alignment carrier 26 at ambient temperature, and goes inside the cryogenic bloc 20 (colder section), but without touching it. This enables the second optical unit 24 to be in a cold environment but without cooling the second optical unit 24, because this would add an amount of complexity.

Preferably, the first optical unit 22 and the second optical unit 24 are identical. This enables to obtain a symmetrical system, which is better for the magnetic fields inside the vacuum chamber 16.

In a variant, the second optical unit 24 is an aspherical lens positioned inside the cryogenic bloc 20.

As previously described, the alignment carrier 26 is able to support the first optical unit 22 and, optionally, also the second optical unit 24.

Preferably, the first optical unit 22, and if applicable, the second optical unit 24, has/have been previously aligned in the alignment carrier 26 outside the quantum computing device 10, for example on an optical bench. For example, when the two optical units 22, 24 are carried by the alignment carrier 26, the two optical units are aligned together in the alignment carrier 26.

Once aligned, the first optical unit 22, and if applicable the second optical unit 24, is/are fixed to the alignment carrier 26. The fixation is for example a mechanical fastening or an adhesive.

As illustrated on figure 2, the alignment carrier 26 is fixed to an external mount 50 (the alignment carrier 26 is not in contact with the cryogenic bloc 20). In particular, on figure 2, the alignment carrier 26 is fixed to the external mount 50 which is supported by two columns 60 holding a round plate 58. All these elements are at room temperature.

Hence, the alignment carrier 26 remains outside the cryogenic bloc 20, but at least a part of the first optical unit 22, and if applicable of the second optical unit 24, is inserted into the cryogenic bloc 20.

Preferably, the alignment carrier 26 is made in stainless steel, or in any suitable material.

An example of an alignment carrier 26 supporting the first optical unit 22 (objective) and the second optical unit 24 (objective) is illustrated on figure 3. As illustrated on this figure, the alignment carrier 26 may have holes 42 for the passage of light or the assembly with other elements. For example, the holes 42 may at least partially be aligned with the aforementioned additional holes arranged on the enclosures 30 and 34 for cooling and trapping the atom vapor.

In a variant, the second optical unit 24 is not carried by the alignment carrier 26, and is aligned directly in the vacuum chamber 16.

An example of functioning of the quantum computing device 10 will now be briefly described.

Initially, the vacuum chamber 16 holds the trapped particles.

For example for atoms, during use, a vacuum is created in the vacuum chamber 16 and a dilute atomic vapor, created in a different unit, is sent in a magneto-optical trap in the vacuum chamber 16. The quantum register is created by populating at least some of the trapping sites with atoms from the dilute atomic vapor.

The laser generation unit 22 generates a laser beam 13. This laser beam 13 is received and focused by the first optical unit 22 on the target region 28 of the cryogenic bloc 20, enabling to generate an array of trapping sites for particles. The laser beam 13 may be referred to herein as a "shaper laser beam".

The electromagnetic flux emitted by particles trapped in the trapping sites is then collected and back propagates in parallel with the laser beam 13 before being redirected towards the imaging unit 14.

Optionally, during preparation of the quantum register, the light coming from the trapping sites is collimated, towards the additional imaging unit 15 by a second optical unit 24. This enables obtaining images of the trapping sites, for example, for verifying the initial state and/or the initial position of the trapping sites.

The person skilled in the art will understand that the embodiments and variants described above in the description can all be combined provided that they are technically compatible.

## Claims

1. Quantum computing device (10) comprising:
- a laser beam generation unit (12) for generating a laser beam which when focused generates an array of trapping sites for particles,
- an imaging unit (14) for imaging particles trapped in the generated trapping sites,
- a vacuum chamber (16) comprising the trapped particles, the vacuum chamber (16) comprising:
• a cryogenic bloc (20) in which a target region (28) for trapping particles is defined,
• a first optical unit (22) able to focus the laser beam generated by the laser beam generation unit (12) on the target region (28) to form an array of trapping sites, and
• an alignment carrier (26) holding the first optical unit (22),
wherein the first optical unit (22) is an objective, the alignment carrier (26) being positioned outside the cryogenic bloc (20) and holding the first optical unit (22) so that at least a part of the first optical unit (22) is inserted into the cryogenic bloc (20).

2. Quantum computing device (10) according to claim 1, wherein the device (10) comprises also an additional imaging unit (15) for imaging the trapping sites, the cryogenic bloc (20) comprising a second optical unit (24) able to collimate, towards the additional imaging unit (15), the light coming from the trapping sites, the second optical unit (24) facing the first optical unit (22),

3. Quantum computing device (10) according to claim 2, wherein the second optical unit (24) is an objective held by the alignment carrier (26), the alignment carrier (26) holding the second optical unit (24) so that at least a part of the second optical unit (24) is inserted into the cryogenic bloc (20).

4. Quantum computing device (10) according to claim 2 or 3, wherein the first optical unit (22) and the second optical unit (24) are identical.

5. Quantum computing device (10) according to any one of claims 1 to 4, wherein the cryogenic bloc (20) comprises a first cryogenic enclosure (30) delimiting a first cold region (32) and a second cryogenic enclosure (34) delimiting a second cold region (36), the second cryogenic enclosure (34) being inside the first cryogenic enclosure (30), the second cold region (36) being colder than the first cold region (32), each enclosure having holes allowing a beam of light to go through said enclosure.

6. Quantum computing device (10) according to any one of claims 1 to 5, wherein the alignment carrier (26) is fixed to an external mount (50) allowing the alignment carrier (26) to remain outside the cryogenic bloc (20) and at least a part of the first optical unit (22) to be inserted into the cryogenic bloc (20).

7. Quantum computing device (10) according to any one of claims 1 to 6, wherein the alignment carrier (26) is made in stainless steel.

8. Quantum computing device (10) according to any one of claims 1 to 7, wherein the cryogenic bloc (20) is made in metal or metal alloy, such as copper, for example in gold-coated copper.

9. Quantum computing device (10) according to any one of claims 1 to 8, wherein the cryogenic bloc (20) has a cylindrical form with an upper cylinder (38) and a lower cylinder (40) centered on the same axis, the upper cylinder (38) containing the target region (28), the diameter of the upper cylinder (38) being smaller than the diameter of the lower cylinder (40).

10. Quantum computing device (10) according to any one of claims 1 to 9, wherein the laser beam generation unit (12) comprises a laser source able to generate a laser beam and a beam shaper able to shape the laser beam so as to obtain an array of trapping sites for particles when the laser beam is focused.

11. Quantum computing device (10) according to any one of claims 1 to 10, wherein the particles are polarizable particles sensitive to alternative current Stark shift from lasers, the particles being preferably neutral atoms, such as Rubidium atoms or Strontium atoms.
